**Europäisches Patentamt**

**European Patent Office**

**Office européen des brevets**

(19)

(11) Veröffentlichungsnummer : **0 023 658**
**B1**

# (12) EUROPÄISCHE PATENTSCHRIFT

(45) Veröffentlichungstag der Patentschrift :
16.02.83

(21) Anmeldenummer : 80104277.1

(22) Anmeldetag : 21.07.80

(51) Int. Cl.³ : **F 16 C 32/06, F 16 C 13/04**

(54) **Hydrostatisches Lager.**

(30) Priorität : 02.08.79 DE 2931364

(43) Veröffentlichungstag der Anmeldung :
11.02.81 Patentblatt 81/06

(45) Bekanntmachung des Hinweises auf die Patenterteilung : 16.02.83 Patentblatt 83/07

(84) Benannte Vertragsstaaten :
**AT BE DE FR GB IT SE**

(56) Entgegenhaltungen :
**DE A 1 965 580**
**DE A 2 147 207**
**DE B 2 049 402**
**GB A 1 141 605**
**US A 3 338 643**
**Patents Abstracts of Japan, Band 2, Nr. 107, 6.**
**September 1978 Seite 3332M78**

(73) Patentinhaber : **Krupp Polysius AG**
**Graf-Galen-Strasse 17**
**D-4720 Beckum (DE)**

(72) Erfinder : **Heinemann, Otto**
**Galileistrasse 8**
**D-4722 Ennigerloh (DE)**
Erfinder : **Lücke, Helmut**
**Zum Igelsbusch 2**
**D-4720 Beckum 2 (DE)**
Erfinder : **Schössler, Werner**
**Zeppelinstrasse 22**
**D-4730 Ahlen (DE)**
Erfinder : **Heiringhoff, Burkhard**
**Theodor-Heuss-Strasse 19**
**D-4740 Oelde (DE)**
Erfinder : **Krumme, Helmut**
**Königstrasse 29**
**D-4724 Wadersloh (DE)**

(74) Vertreter : **Tetzner, Volkmar, Dr.-Ing. Dr. Jur.**
**Van-Gogh-Strasse 3**
**D-8000 München 71 (DE)**

Jouve, 18, rue St-Denis, 75001 Paris, France

Hydrostatisches Lager

Die Erfindung betrifft ein hydrostatisches Lager, enthaltend wenigstens einen Lagerschuh mit einem Unterteil und einem darauf kipp- und drehbeweglich abgestützten Oberteil, wobei zwischen Ober- und Unterteil eine Kammer zur hydraulischen Druckentlastung vorgesehen ist, die über eine Verbindungsbohrung mit der die Lagerfläche bildenden, mit hydraulischem Druckmittel gespeisten Oberseite des Oberteiles in Verbindung steht, die mehrere durch Stege voneinander getrennte Drucktaschen enthält.

Bei einem bekannten hydrostatischen Lager (DE-B-2 049 402) ragt das an seinem äußeren Umfang kugelkalottenförmig ausgebildete untere Ende des Oberteiles des Lagerschuhes in eine zylindrische Ausnehmung des Unterteiles hinein und ist mittels einer zentrisch angeordneten Kugel abgestützt. Die Lagerfläche an der Oberseite des Lagerschuh-Oberteiles enthält eine einzige Drucktasche, die über eine Verbindungsbohrung mit der zwischen Ober- und Unterteil vorgesehenen, zur hydraulischen Druckentlastung dienenden Kammer sowie mit einer Druckmittelquelle in Verbindung steht.

Wenn sich bei einem hydrostatischen Lager dieser Art der kippbeweglich abgestützte Oberteil unter der Wirkung einer entsprechenden Belastung schief stellt, so daß der Lagerspalt in den einzelnen Bereichen eine unterschiedliche Spalthöhe besitzt, so fließt in den Zonen großer Spalthöhe in verstärktem Maße Öl aus, wobei dieser Effekt eine zunehmende Tendenz besitzt. Dadurch entsteht zum einen die Gefahr eines Anlaufens des gelagerten Elementes im Bereich der engsten Stelle des Lagerspaltes, und zum andern sinkt hierbei der Druck stark ab, der von der einzigen Drucktasche über die Verbindungsbohrung in die zur hydraulischen Druckentlastung dienende Kammer zwischen Ober- und Unterteil des Lagers geleitet wird. Dieses bekannte hydrostatische Lager besitzt damit nicht die wünschenswerte betriebliche Zuverlässigkeit und ergibt eine gerade in kritischen Phasen des Betriebs unzureichende Druckentlastung.

Es ist weiterhin ein hydrostatisches Lager der eingangs genannten Art bekannt (US-A-3 338 643), das an der Oberseite des Lager-Oberteiles mehrere Drucktaschen und an der Unterseite des Lager-Oberteiles eine entsprechende Anzahl von Kammern aufweist, wobei jeweils eine Drucktasche der Oberseite über eine mit einer Drosselstelle versehene Verbindungsbohrung mit einer entsprechenden Kammer an der Unterseite des Lager-Oberteiles in Verbindung steht. Das hydraulische Druckmittel gelangt zunächst über einzelne Bohrungen und Drosselstellen in die Drucktaschen an der Oberseite des Lager-Oberteiles und wird dann über die genannten Verbindungsbohrungen den Kammern an der Unterseite des Lager-Oberteiles zugeführt. Um im Bereich dieser Lagerfläche an der Unterseite des Lager-Oberteiles den Schmiermittelfilm mit einem möglichst geringen Verlust an Schmiermittel zu erzeugen, sind in den einzelnen Verbindungsbohrungen zwischen der Ober- und Unterseite des Lager-Oberteiles weitere Drosselstellen vorgesehen. Dadurch stellt sich in den Kammern an der Unterseite des Lager-Oberteiles ein gegenüber der Oberseite stark verringerter Schmiermitteldruck ein. Aus diesem Grunde ergibt sich bei dem geschilderten Lager durch die an der Unterseite des Lager-Oberteiles vorgesehenen Kammern keine starke Druckentlastung zwischen Ober- und Unterteil des Lagers. Hinzu kommt auch bei dieser bekannten Ausführung der oben bereits erwähnte Nachteil einer sich verschlechternden Druckentlastung bei einem Schiefstellen des Lager-Oberteiles durch Ausbildung einer unterschiedlichen Spalthöhe im Bereich der einzelnen Drucktaschen und eine hierdurch verursachte unterschiedliche Druckmittelzufuhr zu den einzelnen Kammern an der Unterseite des Lager-Oberteiles.

Der Erfindung liegt daher die Aufgabe zugrunde, ein hydrostatisches Lager der eingangs genannten Art so auszubilden, daß mit einer besonders einfachen Konstruktion eine sehr zuverlässige, unter allen betrieblichem Umständen einwandfrei arbeitende hydraulische Druckentlastung erreicht wird.

Diese Aufgabe wird erfindungsgemäß dadurch gelöst, daß die obere Mündung der Verbindungsbohrung in der Oberseite der Stege symmetrisch zu den Drucktaschen angeordnet ist.

Bei dem erfindungsgemäßen Lager befindet sich damit die obere Mündung der Verbindungsbohrung im Bereich der engsten Stelle des Lagerspaltes. An dieser Stelle sinkt der Druck selbst dann nicht ab, wenn sich der Oberteil des Lagers durch irgendwelche äußeren Einflüsse einmal schief stellt, so daß der Druck in einzelnen Drucktaschen der Oberseite zurückgeht. Auf diese Weise ist der zur hydraulischen Druckentlastung des Lager-Oberteiles verwendete, über die genannte Verbindungsbohrung der Kammer an der Unterseite des Lager-Oberteiles zugeführte Druck in erwünschter Weise weitgehend unabhängig von den mehr oder weniger schwankenden Werten des Druckes in den einzelnen Drucktaschen. Dadurch ergibt sich eine besonders zuverlässige, unter allen betrieblichen Umständen einwandfrei arbeitende hydraulische Druckentlastung.

Zweckmäßige Ausgestaltungen der Erfindung sind Gegenstand der Unteransprüche und werden im Zusammenhang mit der Beschreibung einiger Ausführungsbeispiele näher erläutert.

In der Zeichnung zeigen

Figur 1 eine Vertikal-Schnittansicht durch einen Lagerschuh mit einstückig ausgebildetem Unterteil ;

Figur 2 eine Aufsicht auf den in Fig. 1 dargestellten Lagerschuh ;

Figur 3 die Zusammenordnung von drei zu einem hydrostatischen Lager gehörenden Lagerschuhen (Lagerschuhe im Vertikalschnitt gesehen) ;

Figur 4 eine Aufsicht auf die drei Lagerschuhe der Fig. 3, einschließlich des nur schematisch angedeuteten hydraulischen Leitungssystems ;

Figur 5 eine Vertikal-Schnittansicht durch einen Lagerschuh, der neben den Lagerschuhen gemäß Fig. 1 und 2 in der Zusammenordnung der Fig. 3 und 4 verwendet wird und der in seinem Unterteil einen Hydraulikkolben aufweist.

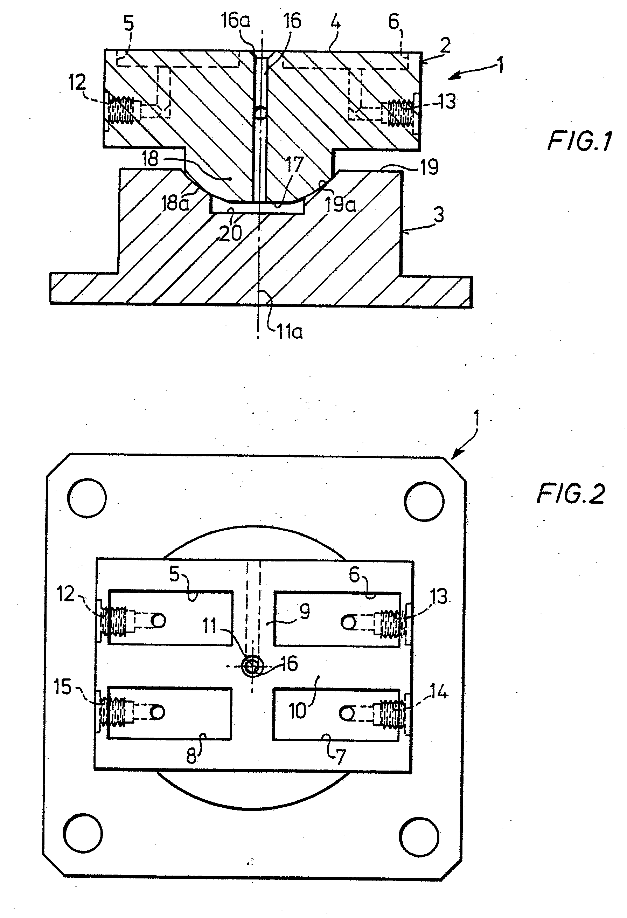

Anhand der Fig. 1 und 2 sei zunächst eine Ausführungsform eines Lagerschuhes erläutert, der in einem erfindungsgemäßen hydrostatischen Lager verwendet werden kann.

Der in diesen Fig. 1 und 2 dargestellte Lagerschuhe 1 enthält einen Oberteil 2, der sich auf einem Unterteil 3 kipp- und drehbeweglich abstützt.

Der Oberteil 2 bildet an seiner Oberseite eine Lagerfläche 4, die in mehrere Drucktaschen 5, 6, 7, 8 (auch Öltaschen genannt) unterteilt ist ; vorzugsweise sind — wie aus Fig. 2 ersichtlich ist — vier durch Stege 9, 10 voneinander getrennte Drucktaschen 5 bis 8 vorgesehen, die symmetrisch zueinander und zum Zentrum der Lagerfläche angeordnet sind.

Jede Drucktasche 5 bis 8 wird über einen gesonderten Anschluß 12, 13, 14 bzw. 15 mit hydraulischem Druckmittel, vorzugsweise Öl, versorgt, wie später noch näher erläutert wird.

Im Oberteil 2 ist eine Verbindungsbohrung 16 vorgesehen, die dessen Oberseite, also die Lagerfläche 4, mit seiner Unterseite 17 verbindet. Diese Verbindungsbohrung ist zentral im Oberteil 2 vorgesehen (vgl. insbesondere Fig. 2), wobei ihre geometrische Achse auf der senkrechten Mittelachse 11a des Lagerschuhes liegt, die durch das Zentrum 11 der Lagerfläche 4 hindruchgeht. Auf diese Weise liegt die obere Mündung 16a der Verbindungsbohrung 16 symmetrisch zu den vier Drucktaschen 5 bis 8, und zwar — vgl. Fig. 2 — im Kreuzungspunkt der beiden die Drucktaschen 5 bis 8 voneinander trennenden Stege 9 und 10.

Figur 1 läßt erkennen, daß der Oberteil 2 und der Unterteil 3 des Lagerschuhes 1 kalottenförmig miteinander in Eingriff stehen. Zu diesem Zweck weist der Oberteil 2 einen zapfenartig nach unten vorstehenden zentralen Teil 18 auf, dessen Unterseite 18a in Richtung des Lagerfußunterteiles 3 konvex ausgebildet ist und dabei eine kugelkalottenförmige, ringförmige (Gegen-) Stützfläche darstellt. In die Oberseite 19 des Lagerschuh-Unterteiles 3 ist dagegen eine passend zur Unterseite 18a des Oberteiles 2 ausgeführte, ebenfalls kugelkalottenförmige Ringstützfläche 19a eingearbeitet, die somit eine konkave Ausnehmung darstellt. Diese Ringstützfläche 19a bildet zusammen mit der Gegenstützfläche 18a im wesentlichen die mechanische Abstützung des Oberteiles 2 auf dem Unterteil 3 dieses Lagerschuhes 1.

In die Oberseite 19 des Lagerschuhunterteiles 3 ist ferner zentral eine Entlastungskammer 20 (beispielsweise als kreisförmige Ausnehmung) eingearbeitet, die von der Ringstützfläche 19a dieses Unterteiles 3 umgeben ist und an ihrer Oberseite von der Unterseite 17 des Oberteiles 2, also in diesem Falle von der Unterseite 17 des zapfenartigen Teiles 18 abgedeckt wird. In diese Entlastungskammer 20 mündet das untere Ende der Verbindungsbohrung 16 aus.

Während des Betriebes, wenn also ein in dieser Zeichnung nicht dargestellter Maschinenteil von der Lagerfläche 4 des Oberteiles 2 drehend abgestützt bzw. gelagert wird, erhalten die Drucktaschen 5 bis 8 über ihre Anschlüsse 12 bis 15 eine ausreichende Ölmenge, damit — je nach Belastung — ein mehr oder weniger großer Ölspalt zwischen dem zu lagernden Maschinenteil und der Lagerfläche 4 gebildet und aufrechterhalten werden kann. Damit der Lagerschuhoberteil 2 eventuellen Verlagerungsbewegungen des zu lagernden Maschinenteiles folgen kann (was insbesondere bei Maschinenteilen mit großen Durchmessern, wie Drehtrommeln, von Bedeutung ist), ist er in der geschilderten Weise kipp- und drehbeweglich auf dem Lagerschuhunterteil 3 abgestützt. Hierbei wird mit Hilfe der Verbindungsbohrung 16 dann über die Entlastungskammer 20 eine hydraulische Druckentlastung der mechanischen Abstützung geschaffen, so daß zwischen der kalottenförmigen Ringstützfläche 18a des Oberteiles 2 und der ebenfalls kalottenförmigen, ringförmigen Gegenstückfläche 19a des Unterteiles 3 eine kelinstmögliche Reibung auftritt, wobei die hydraulische Druckentlastung in äußerst günstiger Weise von dem gemittelten Öldruck der Lagerfläche 4 gesteuert wird. Hierbei hat es sich außerdem als besonders günstig erwiesen, wenn von den vier Drucktaschen 5 bis 8 jeweils zwei sich in bezug auf das Lagerflächenzentrum 11 diagonal gegenüberliegende Drucktaschen (also 5 und 7 bzw. 6 und 8) an eine gemeinsam angetriebene Pumpengruppe oder an eine gemeinsame Mehrfachpumpe angeschlossen sind.

Es sei im Zusammenhang mit den Fig. 1 und 2 noch darauf hingewiesen, daß — wie insbesondere Fig. 1 zeigt — der Lagerschuhunterteil 3 dieses Lagerschuhes 1 im wesentlichen einstückig ausgebildet ist und ortsfest aufgestellt (verschraubt) wird.

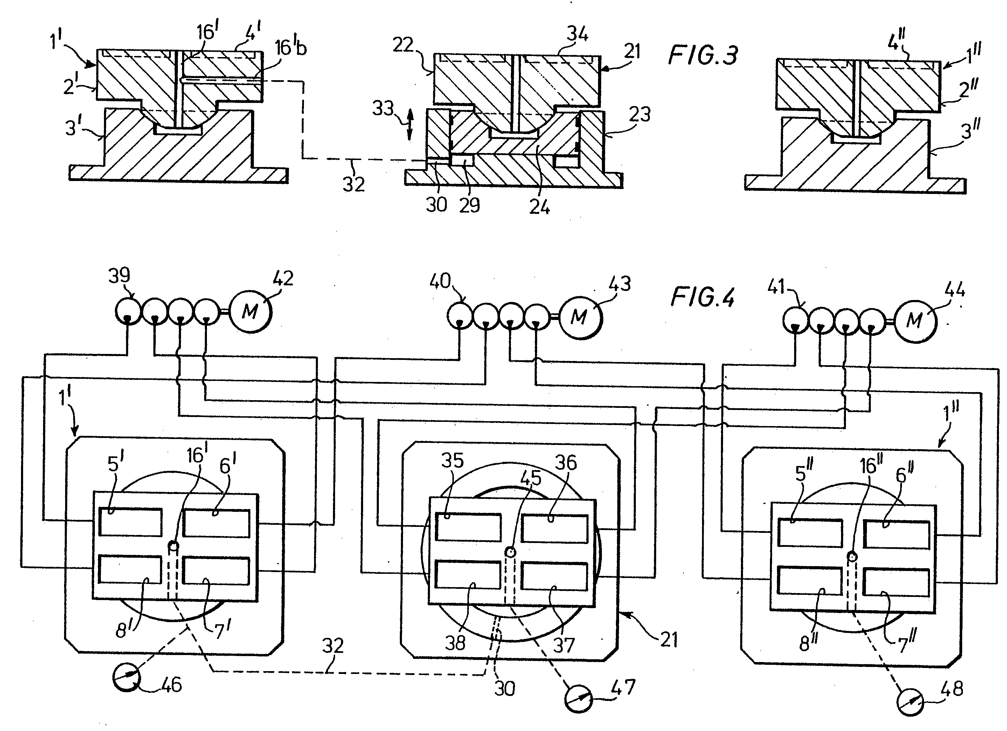

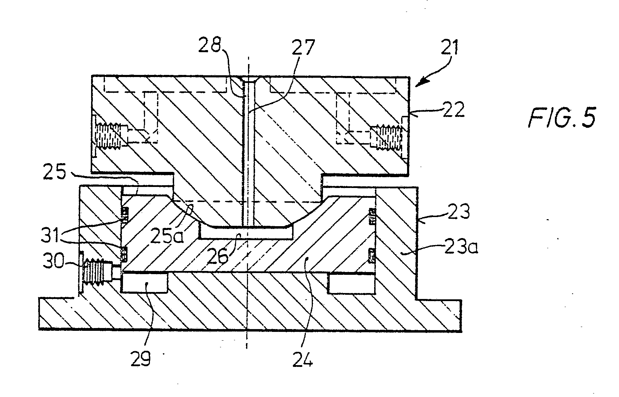

Während es generell möglich ist, das hydrostatische Lager mit einem oder zwei solcher Lagerschuhe gemäß Fig. 1 und 2 auszubilden, wird es bei größeren zu lagernden Drehelementen bzw. Maschinenteilen vorgezogen, wenigstens drei Lagerschuhe im hydrostatischen Lager vorzusehen. Ein solches Ausführungsbeispiel sei anhand der Fig. 3, 4 und 5 näher erläutert, wobei die Fig. 3 und 4 die ganz schematische Zusammenordnung von drei Lagerschuhen zeigt.

Bei einer solchen Zusammenordnung von drei Lagerschuhen besitzen zwei Lagerschuhe 1', 1" einen im wesentlichen einstückig ausgebildeten, festen Unterteil 3' bzw. 3", auf den sich ein Oberteil 2' bzw. 2" abstützt. Diese beiden Lagerschuhe 1' und 1" mit festem Unterteil 3', 3" besitzen die gleiche Konstruktion wie der Lagerschuhe 1 gemäß den Fig. 1 und 2, so daß sich eine weitere Erläuterung erübrigt.

Der in den Fig. 3 und 4 verwendete dritte Lagerschuh 21, der — gemäß den Fig. 3 und 4 — symmetrisch zwischen den beiden zuvor genannten Lagerschuhen 1' und 1" angeordnet sein kann, besitzt einen Oberteil 22, der konstruktiv genauso ausgeführt sein kann wie die Oberteile 2' und 2" der Lagerschuhe 1' und 1". Dagegen ist der Unterteil 23 dieses Lagerschuhes 21 etwas modifiziert, indem er einen — in bezug auf das zu lagernde Drehelement (nicht dargelegt) — radial anstellbaren, in diesem Unterteil geführten Hydraulikkolben 24 enthält.

Wie sich insbesondere aus der Einzeldarstellung dieses Lagerschuhes 21 in Fig. 5 entnehmen läßt, ist in diesem Falle in die Oberseite 25 des Hydraulikkolbens die bereits aus dem Beispiel der Fig. 1 und 2 bekannte Druckentlastungskammer 26 und die Ringstützfläche für die mechanische Abstützung eingearbeitet, und zwar in genau derselben Weise und Form wie die Ringstützfläche 19a und die Entlastungskammer 20 des Lagerschuhunterteiles 3 gemäß Fig. 1 und 2. Da — wie bereits erwähnt — der Lagerschuhoberteil 22 ohne Abweichung der Form und Ausbildung dem Oberteil 2 gemäß Fig. 1 und 2 entspricht, erübrigt sich die Erläuterung von dessen konstruktivem Aufbau ; es sei lediglich auch hier auf die symmetrisch zur vertikalen Mittelachse 27 angeordnete Verbindungsbohrung 28 hingewiesen.

An der Unterseite des Hydraulikkolbens 24 ist im Unterteil 23 eine hydraulische Druckkammer 29 vorhanden, die vorzugsweise (vgl. Fig. 5) als äußere Ringkammer ausgeführt ist und einen Druckanschluß 30 aufweist. Der Außenumfang des Kolbens 24 ist über bekannte Ringdichtungen 31 gegenüber der feststehenden zylindrischen Umfangswand 23a des Unterteiles 23 abgedichtet.

Wie nun in den Fig. 3 und 4 angedeutet ist, steht dieser dritte Lagerschuh 21 mit einem der beiden Lagerschuhe mit festem Unterteil in Verbindung, und zwar in diesem Falle mit dem Lagerschuh 1'. Diese Verbindung ist in der Weise hergestellt, daß die Unterseite des Hydraulikkolbens 24 über die hydraulische Druckkammer 29, deren Druckanschluß 30 sowie über eine nur gestrichelt angedeutete Druckleitung 32 mit der Verbindungsbohrung 16' des Lagerschuhes 1' verbunden ist, wobei die Druckleitung 32 an einen Abzweigkanal 16'b der Verbindungsbohrung 16' angeschlossen ist. Auf diese Weise kann der in der Verbindungsbohrung 16' des Lagerschuhes 1' herrschende Druck (also der gemittelte Öldruck der Lagerfläche 4') zur Steuerung des Hydraulikkolbens 24 des dritten Lagerschuhes 21 ausgenutzt werden, so daß durch eine entsprechende Bewegung des Kolbens 24 in Richtung des Doppelpfeiles 33 der Lagerschuhoberteil 22 mit seiner Lagerfläche 34 radial gegen den — nicht näher dargestellten — Drehteil angestellt werden kann, was wiederum zu einer äußerst gleichmäßigen Lastverteilung zwischen den Lagerschuhen des ganzen hydrostatischen Lagers führt.

Wie bereits weiter oben erwähnt worden ist, werden von den vier Drucktaschen jedes Lagerschuhes zweckmäßigerweise jeweils zwei sich in bezug auf das Zentrum der Lagerfläche diagonal gegenüberliegende Drucktaschen an eine gemeinsam angetriebene Pumpengruppe oder an eine gemeinsame Mehrfachpumpe angeschlossen. Diese Druckmittelversorgung der Drucktaschen für die drei Lagerschuhe 1', 1" und 21 des hydrostatischen Lagers gemäß Fig. 3 und 4 ist in Fig. 4 schematisch dargestellt. Es sind in diesem Falle drei Mehrfachpumpen 39, 40, 41 vorgesehen, die als Vierfachpumpen ausgeführt sind und von je einem gesonderten Antriebsmotor 42, 43 bzw. 44 angetrieben werden.

Betrachtet man beispielsweise die im Bereich des Lagerschuhes 1' angeordnete Mehrfachpumpe 39, so versorgen zwei Pumpenabteile die beiden diagonal gegenüberliegenden Drucktaschen 5' und 7' des Lagerschuhes 1' mit Öl, während die beiden anderen Pumpenabteile die sich diagonal gegenüberliegenden Drucktaschen 36 und 38 des Lagerschuhes 21 mit Öl versorgen. Die im Bereich des mittleren Lagerschuhes 21 angeordnete Mehrfachpumpe 40 versorgt dagegen durch zwei ihrer Pumpenabteile die beiden anderen sich diagonal gegenüberliegenden Drucktaschen 6', 8' des Lagerschuhes 1' sowie die beiden sich diagonal gegenüberliegenden Drucktaschen 6" und 8" des Lagerschuhes 1" ; die übrigen Drucktaschen 35 und 37 des Lagerschuhes 21 sowie die Drucktaschen 5" und 7" des Lagerschuhes 1" werden dann von den entsprechenden Pumpenabteilen der dritten Mehrfachpumpe 41 mit Öl versorgt. Wenn in diesem Falle ein Motor, z. B. der Motor 42, ausfallen sollte, dann wird die Ölversorgung von Seiten der zugehörigen Mehrfachpumpe, also Mehrfachpumpe 39, unterbrochen so daß bei dem Lagerschuh 1' die Drucktaschen 5' und 7', im Lagerschuh 21 die Drucktaschen 36 und 38 ausfallen. Da die jeweils übrigen sich diagonal gegenüberliegenden Drucktaschen der beiden Lagerschuhe 1', 21 weiterhin über einen gesonderten Hydraulikkreis mit Öl versorgt werden, so daß noch eine Mindest-Schmierfunktion aufrechterhalten werden kann.

Wie aus Fig. 4 ferner hervorgeht, kann an jede Verbindungsbohrung 16', 16" 45 der Lagerschuhe 1', 1" bzw. 21 noch eine Drucküberwachungseinrichtung 46, 47 bzw. 48 zugeordnet sein, die dann steuerungsmäßig mit der Ölversorgung der zugehörigen Lagerschuhe 1', 1" bzw. 21 in Verbindung steht.

Generell sei noch darauf hingewiesen, daß die Lagerflächen der Lagerschuhe selbstverständlich der Umfangsform des zu lagernden Drehelements angepaßt sein kann ; selbstverständlich sind auch die Lagerschuhe eines hydrostatischen Lagers nicht in einer Ebene — wie in Fig. 3 der Einfachheit halber dargestellt — sondern mit Abstand auf einem Kreisbogen angeordnet, der der Umfangsform des zu lagernden Drehelements angepaßt ist. In Abweichung von den erläuterten Ausführungsbeispielen kann selbstverständlich auch eine andere geeignete Anzahl von Drucktaschen in der Lagerfläche mit entsprechender Anordnung der Verbindungsbohrung gewählt werden.

**Ansprüche**

1. Hydrostatisches Lager, enthaltend wenigstens einen Lagerschuh (1) mit einem Unterteil (3) und einem darauf kipp- und drehbeweglich abgestützten Oberteil (2), wobei zwischen Ober- und Unterteil eine Kammer (20) zur hydraulischen Druckentlastung vorgesehen ist, die über eine Verbindungsbohrung (16) mit der die Lagerfläche (4) bildenden, mit hydraulischem Druckmittel gespeisten Oberseite des Oberteiles in Verbindung steht, die mehrere durch Stege (9, 10) voneinander getrennte Drucktaschen (5, 6, 7, 8) enthält, dadurch gekennzeichnet, daß die obere Mündung (16a) der Verbindungsbohrung (16) in der Oberseite der Stege (9, 10) symmetrisch zu den Drucktaschen (5, 6, 7, 8) angeordnet ist.

2. Lager nach Anspruch 1, dadurch gekennzeichnet, daß die Lagerfläche (4) vier durch Stege (9, 10) voneinander getrennte, symmetrisch zueinander und zum Zentrum (11) der Lagerfläche angeordnete Drucktaschen (5, 6, 7, 8) aufweist, von denen jeweils zwei sich in bezug auf das Zentrum diagonal gegenüberliegende Drucktaschen (z. B. 5, 7 bzw. 6, 8) an eine gemeinsam angetriebene Pumpengruppe oder an eine gemeinsame Mehrfachpumpe angeschlossen sind, wobei die Mündung (16a) der Verbindungsbohrung (16) im Zentrum der Lagerfläche und im Kreuzungspunkt der Stege angeordnet ist.

3. Lager nach Anspruch 1, dadurch gekennzeichnet, daß die zur hydraulischen Druckentlastung dienende Kammer (20) von einer konkav ausgebildeten, kugelkalottenförmigen Ringstützfläche (19a) des Unterteiles (3) umgeben ist, mit der eine konvex ausgebildete, kugelkalottenförmige Gegenstützfläche (18a) des Oberteiles (2) in Eingriff steht.

4. Lager nach den vorhergehenden Ansprüchen, mit wenigstens drei Lagerschuhen, dadurch gekennzeichnet, daß zwei Lagerschuhe (1', 1") einen einstückig ausgebildeten festen Unterteil (3', 3") besitzen, während der dritte und jeder weitere Lagerschuh (21) in seinem Unterteil (23) einen — in bezug auf das zu lagernde Drehelement — radial anstellbaren, an diesem Unterteil geführten Hydraulikkolben (24) enthält, der an seiner Oberseite (25) die Entlastungskammer (26) und die Ringstützfläche (25a) für die mechanische Abstützung aufweist und dessen Unterseite über eine im Unterteil (23) vorhandene hydraulische Druckkammer (29) sowie über eine Druckleitung (32) mit der Verbindungsbohrung (16') eines der beiden Lagerschuhe mit festem Unterteil verbunden ist.

**Claims**

1. Hydrostatic bearing, containing at least one bearing shoe (1) with a lower portion (3) and an upper portion (2) which is tiltably and rotatably supported thereon, in which a chamber (20) for hydraulic pressure relief is provided between the upper and lower portions and is connected via a connecting bore (16) to the upper side of the upper portion which is supplied with hydraulic pressure medium, forms the bearing surface and contains a plurality of pressure traps (5, 6, 7, 8) separated from each other by crosspieces (9, 10), characterised in that the upper opening (16a) of the connecting bore (16) in the upper surface of the crosspieces (9, 10) is arranged symmetrically to the pressure traps (5, 6, 7, 8).

2. Bearing as claimed in claim 1, characterised in that the bearing surface (4) has four pressure traps (5, 6, 7, 8) which are separated from each other by crosspieces (9, 10) and arranged symmetrically to each other and to the centre (11) of the bearing surface, and each pair of pressure traps (e. g. 5, 7 or 6, 8) which are diametrically opposed relative to the centre are connected to a group of pumps with a common drive or to a common multiple pump, the opening (16a) of the connecting bore (16) being arranged in the centre of the bearing surface and at the point of intersection of the crosspieces.

3. Bearing as claimed in claim 1, characterised in that the chamber (20) which serves for hydraulic pressure relief is surrounded by a concave annular support surface (19a) of the lower portion (3) in the shape of a circular segment which engages with a convex reciprocal support surface (18a) of the upper part (2) in the shape of a circular segment.

4. Bearing as claimed in the preceding claims, with at least three bearing shoes, characterised in that two bearing shoes (1', 1") have an integral fixed lower portion (3', 3") whilst the third an any additional bearing shoe (21) contains a hydraulic piston (24) which is radially adjustable — relative to the rotating member to be supported — and guided on this lower portion and has the pressure relief chamber (26) and the annular support surface (25a) for mechanical support on its upper surface (25), the lower surface thereof being connected via a hydraulic pressure chamber (29) in the lower portion (23) and via a pressure line (32) to the connecting bore (16') of one of the two bearing shoes with a fixed lower portion.

**Revendications**

1. Palier hydrostatique à au moins un coussinet (1) comprenant une partie inférieure (3) sur laquelle prend appui une partie supérieure (2) de manière à être capable d'exécuter un mouvement oscillant et un mouvement de rotation, une chambre (20) de réduction de la pression hydraulique,

qui est prévue entre la partie supérieure et la partie inférieure, communiquant par un trou de liaison (16) avec la face supérieure de la partie supérieure qui forme la surface de portée (4), qui est alimentée en fluide hydraulique sous pression et qui présente plusieurs poches de pression (5, 6, 7, 8) que séparent plusieurs éléments de surface en relief (9, 10), palier caractérisé en ce que l'orifice supérieur (16a) du trou de liaison (16) est disposé symétriquement par rapport aux poches de pression (5, 6, 7, 8) dans la face supérieure des éléments de surface en relief (9, 10).

2. Palier selon la revendication 1, caractérisé en ce que la surface de portée (24) présente quatre poches de pression (5, 6, 7, 8) qui sont séparées les unes des autres par des éléments de surface en relief (9, 10) et sont disposées symétriquement les unes par rapport aux autres et par rapport au centre (11) de la surface de portée et dont chaque groupe de deux (par exemple 5, 7, ainsi 6, 8) qui sont opposées diamétralement par rapport au centre est raccordé à un groupe de pompes à commande commune ou à une pompe multiple commune, l'orifice (16a) du trou de liaison (16) étant disposé au centre de la surface de portée et au point de croisement des éléments de surface en relief.

3. Palier selon la revendication 1, caractérisé en ce que la chambre (20) destinée à la réduction de la pression hydraulique est entourée d'une surface annulaire (19a) d'appui de la partie inférieure (3) qui est concave et en forme de calotte sphérique et qui est en prise avec une contre-surface (18a) d'appui de la partie supérieure (2) qui est convexe et également en forme de calotte sphérique.

4. Palier selon les revendications précédentes et comprenant au moins trois coussinets, caractérisé en ce que deux coussinets (1', 1") comportent une partie inférieure fixe et en une pièce (3', 3"), tandis que le troisième et chacun des autres coussinets (21) renferment dans leur partie inférieure (23) un piston hydraulique (24) dont la position radiale — par rapport à l'élément rotatif qu'il s'agit de monter — est réglable et qui est guidé dans cette partie inférieure, la face supérieure (25) de ce piston hydraulique (24) présentant la chambre (26) de réduction de pression et la surface annulaire (25a) d'appui mécanique, sa face inférieure communiquant avec le trou de liaison (16') de l'un des deux coussinets à partie inférieure fixe par une chambre de pression hydraulique (29) réalisée dans ladite partie inférieure (23) ainsi que par une canalisation (32) de transmission de la pression.

FIG.1

FIG.2

FIG.3

FIG.4

0 023 658

FIG.5